(19) Europäisches Patentamt
European Patent Office
Office européen des brevets

(11) Publication number: 0 000 086
B1

(12) **EUROPEAN PATENT SPECIFICATION**

(45) Date of publication of patent specification: 14.04.82

(51) Int. Cl.³: C 08 G 59/14 //C25D13/06

(21) Application number: 78200031.9

(22) Date of filing: 01.06.78

(54) **Resin binders containing amino groups and process for their preparation.**

(30) Priority: 13.06.77 GB 2461177

(43) Date of publication of application: 20.12.78 Bulletin 78/1

(45) Publication of the grant of the patent: 14.04.82 Bulletin 82/15

(84) Designated Contracting States: DE FR GB

(56) References cited:
FR - A - 1 568 496
FR - A - 2 231 719
FR - A - 2 337 741
GB - A - 983 516

(73) Proprietor: SHELL INTERNATIONALE RESEARCH MAATSCHAPPIJ B.V.
Carel van Bylandtlaan 30
NL-2596 HR DEN HAAG (NL)

(72) Inventor: Raudenbusch, Werner Theodor
Badhuisweg 3
NL-1031 CM Amsterdam (NL)
Inventor: Kooymans, Petrus Gerardus
Badhuisweg 3
NL-1031 CM Amsterdam (NL)
Inventor: Schreurs, Gerardus Cornelis Maria
Badhuisweg 3
NL-1031 CM Amsterdam (NL)
Inventor: Seelen-Kruyssen, Josepha Maria Elisabeth
Badhuisweg 3
NL-1031 CM Amsterdam (NL)

(74) Representative: Puister, Antonius Tonnis, Mr. et al,
P.O. Box 302
NL-2501 CH The Hague (NL)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 000 086 B1

Resin binders containing amino groups and process for their preparation

The invention is concerned with novel resinous binders containing tertiary amino groups which are useful for coating articles by means of cathodic electrodeposition. The present invention is also concerned with the preparation of such binders as well as coating compositions containing them.

It is known to coat electrically conducting articles with resinous binders containing tertiary amino groups by means of cathodic electrodeposition. Generally such articles are immersed in an aqueous coating composition comprising the resinous binder in the form of a salt thereof and a cross-linking agent, and an electrical current is passed between the article (cathode) and an anode which deposits the resinous binder on the article which is then stoved to cure or cross-link the resinous binder.

Known resinous binders having tertiary amino groups may be represented by the formula:—

$$A_1-B_1-(C_1-B_1)_m-A_1 \qquad \text{(I)}$$

wherein

m is 0 or an integer of from 1 to 6, each $A_1$ is the same or different tertiary amino group, $B_1$, or each $B_1$ which may be the same or different, is a group of formula:—

$$-CH_2-\underset{OH}{CH}-CH_2-[O-R-O-CH_2-\overset{OH}{CH}-CH_2]_n-O-R-O-CH_2-\underset{OH}{CH}-CH_2- \qquad \text{(II)}$$

wherein

n is 0 or an integer of from 1 to 10, and R is the hydrocarbon residue of a dihydric phenol, and $C_1$, or each $C_1$ which may be the same or different, is a group derived from a compound having at least two sites capable of reacting with glycidyl ether groups.

Resinous binders of this type, wherein $C_1$ is derived from a diamine or a primary monoamine, are known from GB - A - 1 461 823. A disadvantage of such binders is that they produce rough, incoherent coatings having poor corrosion resistance on bare steel substrates i.e. steel which has not been phosphated. It has also been proposed to incorporate residues of unsaturated fatty acids into such resinous binders e.g. see GB - A - 1 307 585. Although such binders form smoother coatings on bare steel substrates they still have a poor corrosion resistance.

We have now found that if such binders contain at least one group derived from a glycidyl ester of a $C_6$ to $C_{20}$ carboxylic acid then the coatings prepared therefrom are smooth and glossy and have good corrosion resistance even when deposited upon bare steel substrates.

Accordingly, the present invention is concerned with a resinous binder of formula:—

$$A-B-(C-B)_m-A \qquad \text{(III)}$$

wherein

m is 0 or an integer of from 1 to 6, each A is the same or different tertiary amino group, B, or each B which may be the same or different, is a group of formula:—

$$-CH_2-\underset{OH}{CH}-CH_2-[O-R-O-CH_2-\overset{OH}{CH}-CH_2]_n-O-R-O-CH_2-\underset{OH}{CH}-CH_2- \qquad \text{(IV)}$$

wherein

n is 0 or an integer of from 1 to 10, and R is the hydrocarbon residue of a dihydric phenol; and C, or each C which may be the same or different, is a group derived from a compound having at least two sites capable of reacting with glycidyl ether groups, characterised in that at least one of the groups A, B or C is substituted by at least one group $R_1$ having the formula:—

$$-CH_2-\underset{OH}{CH}-CH_2-O-\underset{\overset{\|}{O}}{C}-R_2 \qquad \text{(V)}$$

wherein

$R_2$ is a $C_6$ to $C_{20}$ alkyl group.

The group $R_1$ may be directly attached to at least one of the groups A, B, or C, or indirectly through

an intermediate group which is preferably the residue of a di- or tricarboxylic acid; m is preferably an integer of from 1 to 3, n is preferably an integer of from 1 to 4, and $R_2$ is preferably a secondary or tertiary $C_8$ to $C_{10}$ alkyl group.

The preferred resinous binders of formula III will be described with reference to the following description of the methods of preparing such resinous binders. In general the group $R_1$ is incorporated by the reaction between a glycidyl ester of formula:—

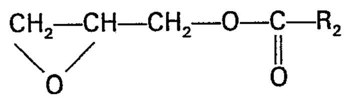

(VI)

wherein

$R_2$ is a $C_6$ to $C_{20}$ alkyl group, preferably a secondary or tertiary $C_8$ to $C_{10}$ alkyl group, and a primary or secondary amino, hydroxyl or acidic, e.g. carboxylic acid, group of a compound of formula I or at least one of its components. This reaction may take place as the final step in the preparation of the binder i.e. by reacting a resinous binder of formula I directly or indirectly with a glycidyl ester of formula VI or may take place by pre-reacting at least one of the components from which the binder is prepared with a glycidyl ester of formula VI. In other words, the preferred resinous binders can be prepared by the reaction, in one or more stages, of

(a) a secondary monoamine,
(b) a diglycidyl ether of a dihydric phenol,
(c) a compound having at least 2 sites capable of reacting with glycidyl ether groups, and
(d) at least the glycidyl ester,

in amounts such that the number of epoxy equivalents of (b) is substantially equal to the number of reactive sites of (a) and (c).

It will be understood by those skilled in the art that the structures given herein represent the average structure of a mixture of reaction products.

One suitable method (method I) of preparing resinous binders of formula III comprises reacting a resinous binder of formula I with

(A) a glycidyl ester of formula VI, or
(B) a cyclic carboxylic acid anhydride and a glycidyl ester of formula VI.

The resinous binders of formula I are prepared by reacting a diglycidyl ether of formula:—

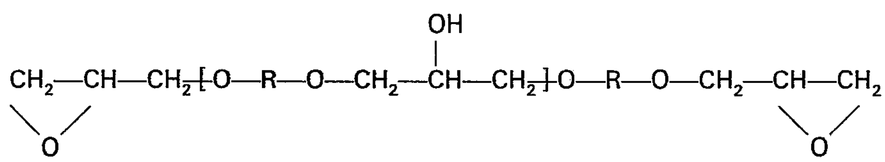

(VII)

wherein

n and R are as hereinbefore defined, with a secondary monoamine and, optionally, a compound having at least two sites capable of reacting with glycidyl ether groups, in amounts such that the number of epoxy eqivalents of the diglycidyl ether is substantially equal to the number of reactive sites of the other reactants, that is to say that deviations from equality are in general below 10%.

The amounts of the reactants which are used depend upon the desired "m" value of the resinous binder of formula I. For example, resinous binders, wherein m is 0, are obtained by reacting about 2 epoxy equivalents of the diglycidyl ether with about 2 moles of the secondary monoamine; resinous binders, wherein m is 1, are obtained by reacting about 4 epoxy equivalents of the diglycidyl ether with about 2 moles of the secondary monoamine and about 1 mole of the compound having at least two sites capable of reacting with glycidyl ether groups; resinous binders, wherein m is 2, are obtained by reacting about 6 epoxy equivalents of the diglycidyl ether with about 2 moles of the secondary monoamine and about 2 moles of the compound having at least two sites capable of reacting with glycidyl ether groups; and resinous binders, wherein m is 3, are obtained by reacting about 8 epoxy equivalents of the diglycidyl ether with about 2 moles of the secondary monoamine and about 3 moles of the compound having at least 2 sites capable of reacting with glycidyl ether groups.

The diglycidyl ethers of formula VII are well known compounds and are available commercially usually as mixtures of compounds having on average more than one glycidyl group per molecule. Theoretically diglycidyl ethers of dihydric phenols have two epoxy groups per molecule but some of the terminal glycidyl groups may be hydrated during the preparation to

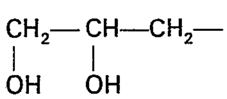 groups.

Therefore the amount of diglycidyl ether to be used is indicated by its number of epoxy equivalents. Preferred diglycidyl ethers are those wherein R is a group of formula:—

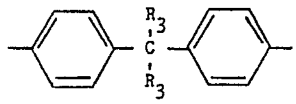

(VIII)

wherein

each $R_3$, which may be the same or different, is H or a $C_1$ to $C_4$ alkyl group. Most preferred diglycidyl ethers are those wherein both $R_3$ groups are methyl groups. Suitably n has an average value of from 0 to 4.

Suitable secondary monoamines are heterocyclic amines, e.g. piperidine and morpholine; dialkylamines, such as di($C_1$ to $C_6$)alkylamines e.g. dimethylamine, diethylamine, dipropylamines, dibutylamines, dipentylamines and methylethylamine; dialkanolamines, such as di($C_1$ to $C_6$)alkanolamines e.g. diethanolamine and dipropanolamines such as diisopropanolamine, and N-alkyl-alkanolamines such as N-($C_1$ to $C_6$)alkyl($C_1$ to $C_6$)alkanolamines e.g. N-methyl-ethanolamine. The secondary monoamines may be further substituted e.g. by alkoxy or carboxyl groups. It can be seen from formula I that such resinous binders have at least two secondary hydroxyl groups which are capable of reacting in method I (A) or (B). However, it is considered desirable to use as the secondary monoamine an alkanolamine since the resulting resinous binders have additional hydroxyl groups which may also react in method I (A) or (B); consequently it is possible to react more of the components in (A) or (B) and to produce a resinous binder of formula III which in addition to having $R_1$ groups also has several unreacted hydroxyl groups which is considered to be advantageous insofar as such binders are to be used in cathodic electrodeposition processes. The most preferred secondary monoamines are diethanolamine and di-iso-propanolamine.

Suitable compounds having at least two sites capable of reacting with glycidyl ether groups, and which therefore form the linking groups $C_1$ or C, are polyols, adducts of polyols and polycarboxylic acid anhydrides, and polycarboxylic acids. Preferred are amines having as reactive sites one or more primary or at least 2 secondary amine groups. Examples of polyols are alkylene glycols and polyoxyalkylene glycols e.g. hexylene glycol, polyoxyethylene glycol and polyoxypropylene glycol; polyhydric phenols e.g. diphenylolmethane and diphenylolpropane. Examples of polycarboxylic acids and anhydrides are maleic, succinic, dodecenylsuccinic, glutaric, adipic, phthalic, tetrahydrophthalic, hexahydrophthalic, endomethylene tetrahydrophthalic, methyl endomethylene tetrahydrophthalic acid and trimellitic acid and their anhydrides. Examples of amines having one or more primary amine or at least 2 secondary amine groups per moleculare are: $C_2$ to $C_{10}$ alkylene primary diamines, such as ethylene diamine, hexylene diamine (1,6-diaminohexane); poly($C_2$ to $C_{10}$)alkylene polyamines, such as diethylene triamine, triethylentetramine, piperazine, N-(2-aminoethyl)piperazine; polyether primary diamines such as 4,9-dioxa-1,12-dodecane diamine; primary mono($C_1$ to $C_6$)alkyl and ($C_1$ to $C_6$)alkanol amines such as methylamine, butylamine, monoethanolamine, mono-isopropanolamine, from which the alkanolamines are preferred. These types of amines may further contain tertiary amine groups; examples are 1-(N,N-dimethylamino-3-aminopropane, 1-(N,N-diethyl)amino-4-aminobutane, and 1-N,N-bis (3-aminopropyl)methylamine.

Primary monoamines may be further substituted by alkoxy, carboxy or sulphonyl groups; examples are 3-ethoxy propylamine, glycine, alanine, p-amino benzoic acid, sulphanilic acid, and sulphanilamide. Presence of a built-in acidic group may improve the cure with cross-linking resins. A built-in sulphonic acid group is preferably deactivated at room temperature by reacting the resinous binder with an excess of glycidyl ester; at stoving temperature the sulphonic acid group is set free and can exert its cure-improving properties.

The preparation of the resinous binders of formula I may be carried out at elevated temperatures e.g. at a temperature in the range of from 50 to 150°C and in the presence of non-reactive solvents such as glycol ethers and ketones. Glycol ethers are usually non-reactive below 100°C. It will be appreciated that mixtures of diglycidyl ethers of formula VII, mixtures of secondary monoamines and/or mixtures of compounds having at least two reactive sites capable of reacting with glycidyl groups may be used. For example, a preferred component (c) is a mixture of

(1) a mono alkanolamine,

(2) a disecondary amine, and

(3) a carboxyl- or sulphonyl substituted primary monoamine such as sulphanilic acid.

The resinous binders of formula I may then be etherified with a glycidyl ester of formula VI (method I(A)). Preferred esters are glycidyl esters of saturated aliphatic monocarboxylic acids in which the carboxyl group is attached to an alpha-branched carbon atom, i.e. a tertiary or quaternary carbon atom, and which carboxylic acids have preferably 9 to 11 carbon atoms per molecule. The amount of glycidyl ester used may vary considerably and will depend on the number of reactive sites available in the resinous binder of formula I. The reaction may be carried out at a temperature of from 50 to 150°C and in the presence of non-reactive solvents such as glycol ethers and ketones. Catalysts may be used e.g. quaternary ammonium salts or hydroxides, phosphonium salts, tertiary amines or phosphines or salts thereof, alkalimetalhydroxides, lithium halides and stannous salts of monocarboxylic acids.

Alternatively the resinous binders of formula I may be reacted with a cyclic carboxylic acid

anhydride and a glycidyl ester of formula VI (method I(B)). Preferred glycidyl esters are those described above. Preferred cyclic carboxylic acid anhydrides which may also contain a carboxylic acid group, are the anhydrides of aliphatic cyclic dicarboxylic acids such as maleic, succinic, dodecenylsuccinic, glutaric and adipic acids, and carbocyclic anhydrides such as the anhydrides of aromatic or alicyclic dicarboxylic acids e.g. phthalic, tetrahydrophthalic, hexahydrophthalic, endomethylene tetrahydrophthalic and methyl endomethylene tetrahydrophthalic acids. Examples of anhydrides containing a further carboxylic acid group are trimellitic anhydride and adducts of maleic anhydride and ethylenically unsaturated fatty acids. The amount of anhydride used may vary considerably and depends on the number of reactive sites of the resinous binder 2 of formula I but is suitably from 0.5 to 4.5 moles per mole of resinous binder of formula I. The amount of the anhydride and glycidyl ester may vary considerably but is preferably such that the resinous binder of formula III is substantially free of carboxylic acid groups. The reaction is suitably carried out at a temperature of from 50 to 150°C and may be carried out in the presence of non-reactive solvents such as glycol ethers and ketones.

Another suitable method (method II) of preparing resinous binders of formula III comprises reacting a diglycidyl ether of formula VII with a secondary monoamine and, optionally, a compound having at least two sites capable of reacting with glycidyl ether groups, wherein at least one of the reactants is substituted by at least one $R_1$ group as defined above and wherein the amounts of the reactants are such that the number of epoxy equivalents of the diglycidyl ether is substantially equal to the number of reactive sites of the other reactants.

Method II is particularly suitable for preparing resinous binders of formula III wherein m is 1 to 6 by reacting

(a) a secondary monoamine,

(b) a diglycidyl ether of formula VII, and a reaction product of

(c) a compound having at least three sites capable of reacting with glycidyl groups wherein the amounts of (c) and (d) are such that the reaction product has at least two sites capable of reacting the glycidyl ether groups, and

(d) a glycidyl ether of formula VI.

The amounts of the reactants which are used in the preferred method II depend upon the desired "m" value of the resinous binder in the same way as described above for the preparation of resinous binders of formula I. For example, resinous binders of formula III, wherein m is 1, are obtained by reacting about 4 epoxy equivalents of the diglycidyl ether with about 2 moles of the secondary monoamine and about 1 mole of the reaction product of (c) and (d) and so on. Suitable diglycidyl ethers, secondary monoamines and glycidyl esters are described above. Suitable compounds of type (c) are polyamines containing at least two primary amino groups, such as $C_2$ to $C_{10}$ alkylene primary diamines, poly($C_2$ to $C_{10}$)alkylene polyamines and polyether primary diamines of the type discussed above with hexamethylene diamine being preferred, and compounds containing a cyclic carboxylic anhydride group and a carboxylic acid group of the type discussed above with trimellitic anhydride or trimellitic anhydride/polyoxyalkylene glycol adducts being preferred. Suitable adducts may be prepared by reacting a polyoxyalkylene glycol with about 200 mole % of trimellitic anhydride. Insofar as compound (c) is a polyamine, preferred reaction products are obtained by reacting about 1 mole of an alkylene primary diamine with about 2 epoxy equivalents of the glycidyl ester of formula VI. Insofar as compound (c) is the above trimellitic anhydride/polyoxyalkylene glycol adduct, preferred reaction products are obtained by reacting the adduct with about 2 epoxy equivalents of the glycidyl ester of formula VI. The above method may be carried out in several stages e.g. the diglycidyl ether of formula VII may be pre-reacted with the secondary monoamine. All of the above reactions may be carried out at elevated temperature, e.g. at a temperature of from 50 to 150°C, and in the presence of non-reactive solvents such as glycol ethers and ketones.

Preferred are those reaction products of (c) and (d) wherein (c) has at least three sites capable of reacting with glycidyl groups and the reaction product has two sites capable of reacting with glycidyl ether groups; an example is the reaction product of 1 mole of 1,6-diaminohexane and two moles of (d). However, reaction products of this type may have more than two, for example 3 or 4, sites reactive with glycidyl ether groups, as exemplified by the reaction products of 1 mole of diethylene triamine or triethylene tetramine with 2 moles of (d); such products have 3 and 4 reactive sites, respectively, and will form with adducts of (a) and (b) resinous binders which are "star-shaped", that is to say that the group C in the formula III contains one or more side chains —B—A.

The resinous binders of formula III may contain from 1 to 6 perferably 2 to 4 groups, derived from the glycidyl ester of formula VI. Usually the weight of such groups varies from about 10 to 50% weight of the resinous binder. Moreover, preferred resinous binders of formula III have a hydroxyl content of from 200 to 600 meq/100 g, more preferably from 200 to 400 meq/100 g, for improved corrosion resistance on bare steel. In addition, preferred resinous binders have preferred calculated average molecular weights of from 2000 to 5000.

As stated above, the resinous binders of formula III are particularly suitable as components of aqueous coating compositions for use in cathodic electrodeposition processes. Accordingly the invention is also concerned with thermosetting coating compositions, such as water-dilutable binder concentrates and aqueous coating compositions comprising a resinous binder of formula III, which may

have been prepared as hereinbefore described, wherein at least about 20% of the amino groups are neutralised by an acid.

Suitable aqueous coating compositions comprise about 2 to 20%w of the resinous binder of formula III. The acid, which has the effect of making the resinous binder water-soluble as well as making it susceptible to cathodic electrodeposition may be inorganic e.g. hydrochloric, sulphuric acid, or organic e.g. formic, acetic, maleic, citric or lactic acid, with lactic acid being preferred. Usually from 20 to 100% of the amino groups are neutralized by the acid. The binder concentrate and the aqueous coating composition contains preferably a cross-linking agent such as melamine/formaldehyde; benzoguanamine/formaldehyde; urea/formaldehyde and phenol/formaldehyde resins, with alkoxylated melamine e.g. hexamethoxymethylmelamine resins being preferred. Suitable amounts of cross-linking agents are from 1 to 50%w, preferably from 5 to 25%w, based on the weight of the resinous binder of formula III. The aqueous compositions may also contain other components such as solvents e.g. glycol ethers, pigments, fillers, dispersing agents and stabilizers.

The aqueous coating compositions are preferably prepared by dissolving the resinous binder in a solvent such as a glycol ether, adding the cross-linking agent and acid followed by the addition of water, preferably demineralized water. Values for pH are usually of from 3.0 to 6.0 but may be above 6.0. Although the compositions are particularly suitable for coating bare steel substrates they may also be used for coating phosphatized steel substrates.

The invention will be illustrated with reference to the following Examples.

The diglycidyl ethers (named Polyethers) used therein were commercial polyglycidyl ethers of 2,2-bis(4-hydroxyphenyl)propane (also known as Bisphenol A) having the following properties:

| Polyether | A | D | E |
|---|---|---|---|
| epoxy molar mass | 190 | 472 | 893 |
| at room temperature | liquid | solid | solid |

The glycidyl ester C10E was a commercial glycidyl ester of saturated aliphatic monocarboxylic acids in which the carboxyl group is attached to a tertiary or quaternary carbon atom, and which carboxylic acids have on average 10 carbon atoms per molecule; the epoxy molar mass was 250.

Aliphatic hydroxy content was on non-volatiles.

Example 1
(comparative)

Polyether E (1786 g; 2.0 epoxy equivalents) was melted and reacted with diethanolamine (210 g; 2.0 mole) at 135°C for 5 hours.

The resulting resinous binder had a nitrogen content of 1.00 meq/g, a residual epoxy content of below 0.02 meq/g and a calculated aliphatic hydroxy content of about 600 meq/100 g.

Example 2

A resinous binder (200 g, 0.1 mole) prepared according to Example 1 was melted and mixed with succinic anhydride (20 g, 0.2 mole) for 5 minutes at 145°C. Glycidyl ester C10E (60 g; 0.24 epoxy equivalents) was added and the reaction continued for 1 hour at 135°C. The resulting resinous binder had a nitrogen content of 0.71 meq/g, an acid content of 0.04 meq/g and a calculated aliphatic hydroxy content of about 430 meq/100 g. About 21.4%w of the resinous binder was derived from the glycidyl ester.

Example 3

A resinous binder (200 g; 0.1 mole) prepared according to Example 1 was melted and reacted with glycidyl ester C10E (74.4 g; 0.3 epoxy equivalents) in the presence of benzyldimethylamine (0.27 g), as etherification catalyst, for 6 hours at 140°C. The resulting resinous binder had a nitrogen content of 0.73 meq/g; a residual epoxy equivalent of 0.03 meq/g and a calculated aliphatic hydroxy content of about 440 meq/100 g. About 27.1%w of the resinous binder was derived from the glycidyl ester.

Example 4
(comparative)

A mixture of Polyether D (566 g; 1.2 epoxy equivalents) diisopropanolamine (79.8 g; 0.6 mole) and isopropanolamine (22.5 g; 0.3 mole) was melted and reacted at 140°C for 3 hours.

The resulting resinous binder had a nitrogen content of 1.35 meq/g, a residual epoxy content of 0 and a calculated aliphatic hydroxy content of about 670 meq/100 g.

Example 5

A resinous binder (233 g; 0.3 mole) prepared according to Example 4 was melted and a blend of trimellitic anhydride (19.2 g; 0.1 mole), glycidyl ester C10E (62.5 g; 0.25 epoxy equivalents) and dry acetone (40 g) added gradually (over 0.5 hour) thereto whilst maintaining the temperature at 130°C and distilling off the acetone. After addition, the reaction was continued for 2 hours at 135°C. The resulting resinous binder had a nitrogen content of 0.98 meq/g, an acid content of 0.02 meq/g, an epoxy content of 0.08 meq/g and a calculated aliphatic hydroxy content of about 500 meq/100 g. About 20.5%w of the resinous binder was derived from the glycidyl ester.

Example 6
(comparative)

(a) Polyether D (944 g; 2 epoxy equivalents) was dissolved in ethylene glycol monobutylether (450 g) and reacted with diisopropanolamine (133 g; 1.0 mole) at 80°C for 3 hours after which 50% of the epoxy groups had reacted. The resulting solution had a residual epoxy content of 0.65 meq/g solution and a solids content of 70.53%w.

(b) This solution (615 g; containing 0.4 epoxy equivalents) was added gradually over a period of 1 hour to a solution of hexamethylene diamine (23.2 g; 0.2 mole) in ethylene glycol monobutylether (20 g) at a temperature of 80°C, after which the reaction was continued at 80°C for 2 hours. The resulting solution of resinous binder had a nitrogen content of 1.22 meq/g solution, an epoxy content of 0 and a calculated solids contents of 69.4%w.

Example 7

Example 6 was repeated with the difference that in step (b) the solution obtained in step (a) was added to a solution obtained as follows.

1.6-Diamino hexane (23.2 g, 0.2 mole) was heated in ethylene glycol monobutylether (20 g) to 80°C, after which glycidyl ester C10E (100 g, 0.4 epoxy equivalents) was added gradually for a period of 1 hour at 80°C. The reaction was continued for 1 hour at 80°C.

The resulting solution of resinous binder had a nitrogen content of 1.05 meq/g solution and a calculated solids content of 73.5%w.

About 17.9%w of the resinous binder was derived from the glycidyl ester.

Example 8

(a) A solution was prepared by dissolving trimellitic anhydride (192 g; 1.0 mole) in dry acetone (300 g) and adding thereto glycidyl ester C10E (250 g; 1.0 epoxy equivalent).

(b) Polypropylene glycol having a molecular weight of 420 (210 g; 0.5 mole) was heated to 135°C after which the solution obtained in (a) above was added gradually (over 1 hour) whilst maintaining the temperature at 130°C and distilling off the acetone. After addition the reaction was continued for 3 hours at 135°C. The product, a viscous liquid, had an acid content of 1.58 meq/g.

(c) The product (130.4 g; 0.1 mole) obtained in (b) above was reacted with Polyether D (189 g; 0.4 epoxy equivalent value of about 2) and diethanolamine (21.0 g; 0.2 mole) at a temperature of 130°C for 2 hours. The resulting resinous binder had a nitrogen content of 0.62 meq/g, an acid content of 0.09 meq/g and a calculated aliphatic hydroxyl content of 470 meq/100 g. About 14.7%w of the resinous binder was derived from the glycidyl ester.

Example 9

Glycidyl ester C10E (250 g; 1.0 epoxy equivalents) was added gradually (over 0.5 hour) to a solution of ethylene diamine (30 g; 0.5 mole) in ethylene glycol monobutyl ether (50 g). The temperature was not allowed to exceed 80°C. The resulting clear solution had an epoxy value of 0. A solution of sulphanilic acid (17.3 g, 0.1 mole) and diethanolamine (42.0 g. 0.4 mole) in water (30 g) was then added followed by a solution of Polyether A (304 g; 1.6 epoxy equivalents) in ethylene glycol monobutyl ether (170 g). The mixture was then stirred at 80°C for 1 hour and at 110°C for 2 hours. The resulting clear solution had a nitrogen content of 1.81 meq/g solution, an epoxy content of 0, a residual acid content of 0.10 meq/g solution and a solids content of 72.0%w. About 38.8%w of the resinous binder was derived from the glycidyl ester.

Example 10
(comparative)

A resinous binder (200 g; 0.1 mole) prepared according to Example 1 was reacted with linseed oil fatty acid (54.6 g, 0.2 mole) in the presence of toluene (25 g) and stannous octoate (0.8 g) at 220°C for 1 hour whilst removing the water of esterification (335 g) and toluene (20 g) azeotropically. The resulting resinous binder had a nitrogen content of 0.76 meq/g and a residual acid value of 0.02 meq/g.

Examples 11 to 20

Coating compositions were prepared from the resinous binders, or solutions thereof, obtained in Examples 1 to 10. The general procedure was to dissolve the resinous binder, if necessary, in a solvent

(ethylene glycol monobutyl ether was used except in Examples 14, 15 and 18 where a mixture of this ether (16.7 g) and isophorone (8.3 g) was used) followed by the addition of a cross-linking agent "Cymel" 301 (hexamethoxymethyl melamine) and lactic acid. Demineralized water was then added slowly. In all Examples the compositions had a 10%w solids content. The amounts of the components are given in Table 1.

Table 1

| Ex. | Resinous binder or solution thereof | | Sol-vent | Cross-linking agent | Lactic acid (90%w aqueous solu-tion) | Deminer-alized water | %N neutra-lized | pH |
|---|---|---|---|---|---|---|---|---|
| | Example | amount (g) | (g) | (g) | (g) | (g) | | |
| 11* | 1 | 95 | 43 | 5 | 9.5 | 847.5 | 100 | 3.8 |
| 12 | 2 | 95 | 43 | 5 | 6.7 | 850 | 100 | 3.5 |
| 13 | 3 | 100 | 25 | 5.3 | 7.3 | 918 | 100 | 4.2 |
| 14* | 4 | 100 | 25 | 11.1 | 10.1 | 965 | 75 | 4.0 |
| 15 | 5 | 100 | 25 | 7.4 | 7.4 | 967 | 75 | 4.2 |
| 16* | 6 | 144† | — | 25 | 8.8 | 1072 | 50 | 4.8 |
| 17 | 7 | 136† | 8 | 25 | 7.2 | 1074 | 50 | 4.4 |
| 18 | 8 | 100 | 25 | 11.1 | 5.1 | 970 | 82 | 4.1 |
| 19 | 9 | 139† | — | 5.3 | 11.5 | 897 | 100 | 4.0 |
| 20* | 10 | 95 | 43 | 5 | 7.2 | 850 | 100 | 3.4 |

* comparative
† solutions

Examples 21 to 30

The coating compositions prepared according to Examples 11 to 20 were cathodically electrodeposited onto solvent degreased steel panels at a temperature of 25±1 °C and voltages of from 50 to 200 volts (direct current). The coatings were cured at 180°C for 30 minutes. The panels were examined visually and the thickness of the coatings determined. The coated panels obtained from compositions of the present invention were then subjected to a salt spray corrosion resistance test (ASTM B 117—64; 10 days). The appearances of the coated panels prepared from the comparative compositions, except Example 30, were such that it was not considered worthwhile to carry out this salt spray test. The results are given in Table II.

In addition the procedure was repeated after storing the compositions of the present invention for 4 weeks at 40°C. Substantially the same results were obtained.

Table II

| Example | Coating Compostion Example | Coating Thickness ($\mu$m) | Coating Appearance | Salt spray test mm loss of adhesion from scratch |
|---|---|---|---|---|
| 21* | 11 | 15—30 | rough in-coherent | — |
| 22 | 12 | 22—25 | smooth, glossy | 4—5 |
| 23 | 13 | 22—24 | smooth glossy | 5—10 |
| 24* | 14 | 20—30 | rough, in-coherent | — |
| 25 | 15 | 24—26 | smooth, glossy | 4—6 |
| 26* | 16 | 20—30 | rough, in-coherent | — |
| 27 | 17 | 22—24 | smooth, glossy | 5 |
| 28 | 18 | 22—23 | smooth, glossy | 5 |
| 29 | 19 | 22—24 | smooth, glossy | 8—10 |
| 30* | 20 | 26—28 | smooth | 50† |

* comparative
† total loss of adhesion

Example 31

(a) Hexamethylene 1,6-diamine (116 g; 1 mole) was heated to 100°C in a reactor equipped with stirrer, thermometer and nitrogen blanket. Glycidyl ester C10E (500 g; 2 epoxy equivalents) were added gradually in about $\frac{1}{2}$ hour from a dropping funnel at a reaction temperature between 100 and 110°C, and the mixture was heated for 2 hours at 110°C to complete the reaction; the combined epoxy + N content was 3.30 meq/g (total 2.02 equivalents).

(b) Polyether D (2832 g; 6 epoxy equivalents) was dissolved in ethylene glycol monobutyl ether (1610 g) at 75°C in a reactor equipped with stirrer, nitrogen blanket, and means for cooling and heating. Diethanolamine (210 g; 2 moles), the adduct prepared at (a), and 1-N,N-dimethylamino-3-amino propane (102 g; 1 mole) were added to the solution; the temperature was kept below 100°C by cooling, and the mixture was kept for 3 hours at 95—100°C. The residual epoxy content was zero, the N content 1.12 meq/g solution; the calculated solids content was 70%w.

(c) An aqueous binder solution was prepared by adding to the final solution of (b) (114 g) a cross-linking agent (hexamethoxymethyl melamine; 20 g) and lactic acid (3.8 g of 90%w aqueous lactic acid). Demineralized water (956 g) was added slowly. The aqueous solution had the following properties:

| | |
|---|---|
| solids content | 10%w |
| pH | 6.5 |
| %N neutralized | 30 |
| appearance | milky-blue solution |
| storage stability: | no visible change after 40 days at 40°C. |

(d) The aqueous binder solution was evaluated by cathodic electrodeposition as described in Examples 21 to 30. The cured films (thickness 20—22 micrometer) were smooth and glossy; salt spray resistance 8—10 mm loss from scratch.

## Example 32

Binder with sulphanilamide and trimellitic anhydride.

(a) Polyether D (283.2 g; 0.6 epoxy equivalent), sulphanilamide (34.4 g; 0.2 mole) and diethanolamine (21.0 g; 0.2 mole) were dissolved in dioxane (148 g) at 70—80°C, the mixture was kept at 115°C for 3 hours when analysis for (epoxy + N) indicated complete conversion of epoxy.

Trimellitic anhydride (19.2 g; 0.1 mole) and glycidyl ester C10E (50 g; 0.2 mole) were added and the mixture was kept at 115°C for $2\frac{1}{2}$ hours.

Analysis for epoxy+N indicated no further reaction (complete conversion of epoxy). The dioxane was removed in vacuum, and ethylene glycol monobutyl ether was added to make a solution with 74%w solids.

(b) An aqueous binder containing 10%w of the resinous adduct was prepared by adding hexamethoxymethylmelamine (5.7 g) and lactic acid (2.0 g of 90%w aqueous acid; 0.02 acid equivalent) to 70 g of the binder solution of (a) and adding slowly demineralized water (440 g). The milky-blue aqueous solution had pH 3.8; neutralization degree 40%, no visible change after 4 weeks at 40°C.

(c) The aqueous binder solution was evaluated by cathodic electrodeposition as described in Examples 21 to 30.

The cured films (25 micrometer) were smooth and glossy; the impact resistance (Erichsen reverse) was >90 kgcm (>9 Nm), the methylethyl ketone resistance 50 double rubs, and the salt spray resistance 5—10 mm from scratch.

## Example 33

A pigmented binder.

(a) An adduct of 1,6-diamino-hexane and glycidyl ester C10E was prepared as in Example 31 (a).

(b) Polyether D (2832 g; 6 epoxy equivalents) was dissolved in ethylene glycol monobutyl ether (1432 g) at 120°C in a reactor equipped with stirrer, reflux condensor, and thermometer. A homogeneous mixture of diethanolamine (210 g; 2.0 mole), ethanolamine (45.8 g; 0.75 mole), sulphanilic acid (43.3 g; 0.25 mole) and demineralized water (50 g) was added at once, followed by the adduct prepared at (a). The mixture is kept at 120°C for 3 hours, then more glycidyl ester C10E (186 g; 0.75 epoxy equivalent) is added, and the mixture is kept at 120°C for another 1.5 hour.

The (epoxy + N) content is then below 1.35 meq/g solids, the acid content is 0.04 meq/g solids, and the solids content is 72.7%w.

(c) An aqueous binder solution (degree of neutralization about 55%) was prepared by dissolving in 165 g of the final solution of (b): hexamethoxymethyl melamine (21.1 g) and lactic acid (8.3 g of a 90%w lactic acid in water); then demineralized water (395 g) was added slowly.

(d) Pigmented paint. 200 g of the solution of (c) were ballmilled with $TiO_2$ (36 g), carbon black (2 g) and clay (2 g). A further 390 g of solution (c) and water (620 g) were added, and the mixture further ballmilled until homogeneous. The pH was 4.7.

(e) The paint was cathodically electrodeposited onto degreased steel panels for 2 minutes at 150 to 200 V, cure was effected by stoving at 180°C for 30 minutes.

| Properties of the films. | |
|---|---|
| thickness | 20—22 micrometer |
| resistance to methyl ethyl ketone: | good |
| impact resistance (Erichsen reverse): | >90 kgcm (>9 Nm) |
| conical mandrel bend | passed 3 mm |
| salt spray resistance: | <3 mm from scratch. |

Example 34

Preparation of a "star-shaped" binder.

(a) Triethylenetetramine (146 g; 1 mole) is heated to 100°C, and glycidyl ester C10E (500 g; 2 epoxy equivalents) is added gradually in 30 minutes while keeping the temperature between 100 and 110°C; the mixture is further kept at 110°C for 2 hours to complete the reaction.

The product is an adduct having on average 4 NH functions per molecule.

(b) Polyether D (189 g; 0.4 epoxy equivalent) was dissolved in ethylene glycol monobutyl ether (103 g) at 60°C. Diethanolamine (21 g; 0.2 mole) was added in 5 minutes, and the temperature was kept at 65°C for 1 hour, then the epoxy value indicated that the reaction was substantially completed. Adduct prepared at (a) was added (32.3 g; 0.2 NH equivalents) and the mixture was kept at 120°C for 1 hour; analysis for (epoxy + N) indicated that the reaction was substantially completed.

(c) 114 g of this 70%w adduct solution was mixed with hexamethoxymethylmelamine (20 g) and lactic acid (5.3 g of 90%w aqueous lactic acid; 53 meq acid); slow addition of demineralized water (911 g) provided an aqueous solution (10%w solids, 40% neuralization) with $p_H$ 5.2.

(d) Cathodic electrodeposition (2 minutes, 150—200 V) onto degreased steel panels, and cure (30 minutes at 180°C) provided films of very good appearance, 20 micrometers thick, with a salt spray resistance of 5—10 mm.

Example 35

Binder with sulphanilamide, cure with phenolic resin.

(a) Polyether D (283.2 g; 0.6 epoxy equivalent) and Polyether A (111.6 g; 0.6 epoxy equivalent) were dissolved in ethyleneglycol monobutylether (75 g) with stirring at 75°C; the solution was cooled to 50°C. Diethanolamine (31.5 g; 0.3 mole) dissolved in ethylene glycol monobutylether (35 g) was added, and the solution was kept at 40—45°C until analysis for epoxy + N indicated complete conversion of epoxy. A solution of sulphanilamide (25.8 g; 0.15 mole), adduct prepared in Example 31(a) (92.4 g; 0.15 mole), and 1—N, N-dimethylamino-3-amino-propane (15.3 g; 0.15 mole) in dioxane (51 g) was added, followed by more ethylene glycol monobutylether (79 g). The mixture was stirred at 76—78°C for 2 hours and at 115°C for 1 hour. The residual epoxy content was zero, the solids content 70%w.

(b) An aqueous binder solution was prepared by adding to the final solution of (a) (71.4 g) a commercial phenolic resin ("Setaliet" 100; 12.5 g; "Setaliet" is a registered Trade Mark) dissolved in ethyleneglycol monobutyl ether (3.2 g) and isophorone (1.6 g), and lactic acid (2.0 g of 90%w aqueous lactic acid). Demineralized water (536 g) was added slowly. The aqueous solution had the following properties:

| | |
|---|---|
| solids content | 10%w |
| $p_H$ | 6.0 |
| %N neutralized | 21.4 |
| appearance | milky-blue solution |
| storage stability | no visible change after 2 weeks at 40°C. |

(c) The aqueous binder solution was evaluated by cathodic electrodeposition as described in Examples 21 to 30. The cured films were smooth and glossy; the acetone resistance was good, and the salt spray resistance 10 mm loss from scratch.

## Claims

1. Resinous binder of formula

$$A—B-\!\!(C—B)_{\overline{m}}A$$

wherein

m is 0 or an integer of from 1 to 6, each A is the same or different tertiary amino group, B, or each B which may be the same or different, is a group of formula:—

$$—CH_2—\underset{|\atop OH}{CH}—CH_2\!\!+\!\!\left[OR—O—CH_2—\overset{OH\atop |}{CH}—CH_2\right]_n\!O—R—O—CH_2—\underset{|\atop OH}{CH}—CH_2—$$

wherein

n is 0 or an integer of from 1 to 10, and R is the hydrocarbon residue of a dihydric phenol; and C, or each C which may be the same or different, is a group derived from a compound having at least two sites capable of reacting with glycidyl ether groups, characterized in that at least one of the groups A, B, or C is substituted by at least one group $R_1$ having the formula:—

$$-CH_2-\underset{\displaystyle OH}{\underset{|}{CH}}-CH_2-O-\underset{\displaystyle O}{\underset{\|}{C}}-R_2$$

wherein

$R_2$ is a $C_6$ to $C_{20}$ alkyl group.

2. Resinous binder as claimed in claim 1, characterized in that $R_2$ is a secondary or tertiary $C_8$ to $C_{10}$ alkyl group.

3. A process for the preparation of a resinous binder as claimed in claim 1 or claim 2, characterized in that the group $R_1$ is incorporated by the reaction of (1) at least a glycidyl ester of an aliphatic monocarboxylic acid with 7 to 21 carbon atoms per molecule and (2) a primary or secondary amino, hydroxyl, or acidic group of a compound of formula

$$A_1-B_1-(C_1-B_1)_{m}-A_1$$

wherein

$A_1$, $B_1$, $C_1$ and m have the same meaning as A, B, C and m respectively in claim 1 or at least one of its components.

4. A process as claimed in claim 3, characterized in that the compound of formula

$$A_1B_1-(C_1-B_1)_{m}-A_1$$

is reacted with the glycidyl ester and a cyclic carboxylic acid anhydride.

5. A process as claimed in claim 3, characterized in that the resinous binder is prepared by the reaction, in one or more stages, of

(a) a secondary monoamine,

(b) a glycidyl ether of a dihydric phenol, and

(c) a compound having at least 2 sites capable of reacting with glycidyl ether groups, and

(d) at least the glycidyl ester, in amounts such that the number of epoxy equivalents of the diglycidyl ether (b) is substantially equal to the number of reactive sites of (a) and (c), or to the number of reactive sites of (a) and a reaction product

(e) of (c) and (d), the reaction product (e) having at least 2 sites capable of reacting with glycidyl ether groups.

6. A process as claimed in claim 5, characterized in that component (a) is a di(hydroxyalkyl)amine.

7. A process as claimed in claim 5 or 6, characterized in that component (c) has as reactive sites one or more primary or at least 2 secondary amine groups per molecule.

8. A process as claimed in claim 7, characterized in that component (c) is a mixture of (1) a monoalkanolamine, (2) a disecondary amine, and (3) a carboxyl or sulphonyl substituted primary monoamine.

9. A process as claimed in claim 8, characterized in that component (c) (3) is sulphanilic acid.

**Revendications**

1. Liant résineux de formule:

$$A-B-(C-B)_{m}-A$$

dans laquelle m est 0 ou un nombre entier de 1 à 6, les A sont des groupes amino tertiaire identiques ou différents, B ou les B, qui peuvent être identiques ou différents, sont chacun un groupe de formule:

$$-CH_2-\underset{\displaystyle OH}{\underset{|}{CH}}-CH_2-[OR-O-CH_2-\overset{\displaystyle OH}{\overset{|}{CH}}-CH_2]_n-O-R-O-CH_2-\underset{\displaystyle OH}{\underset{|}{CH}}-CH_2-$$

dans laquelle n est 0 ou un nombre entier de 1 à 10 et R est le résidu hydrocarboné d'un phénol dihydrique; et C ou les C, qui peuvent être identiques ou différents, sont chacun un groupe dérivé d'un composé ayant au moins deux sites capables de réagir avec des groupes éther glycidique, caractérisé

en ce qu'au moins un des groupes A, B ou C est substitué par au moins un groupe $R_1$ ayant la formule:

$$-CH_2-\underset{OH}{\underset{|}{CH}}-CH_2-O-\underset{O}{\underset{\|}{C}}-R_2$$

dans laquelle $R_2$ est un groupe alcoyle de $C_6$ à $C_{20}$.

2. Liant résineux selon la revendication 1, caractérisé en ce que $R_2$ est un groupe alcoyle secondaire ou tertiaire de $C_8$ à $C_{10}$.

3. Procédé pour la préparation d'un liant résineux tel que défini dans l'une des revendications 1 et 2, caractérisé en ce que le groupe $R_1$ est incorporé par la réaction de (1) au moins un ester de glycidyle d'un acide monocarboxylique aliphatique ayant de 7 à 21 atomes de carbone par molécule et (2) un groupe amino primaire ou secondaire, hydroxyle ou acide d'un composé de formule

$$A_1-B_1-(C_1-B_1)_m-A_1$$

dans laquelle $A_1$, $B_1$, $C_1$ et m ont la même signification que A, B, C et m, respectivement, dans la revendication 1, ou au moins un de ses constituants.

4. Procédé selon la revendication 3, caractérisé en ce que le composé de formule

$$A_1-B_1-(C_1-B_1)_m-A_1$$

est mis à réagir avec l'ester de glycidyle et un anhydride d'acide carboxylique cyclique.

5. Procédé selon la revendication 3, caractérisé en ce que le liant résineux est préparé par la réaction, en une ou plusieurs étapes, de

(a) une monoamine secondaire,

(b) un éther glycidique d'un phénol dihydrique, et

(c) un composé ayant au moins 2 sites capables de réagir avec des groupes éther glycidique, et

(d) au moins l'ester de glycidyle, en quantités telles que le nombre d'équivalents d'époxy de l'éther diglycidique (b) soit sensiblement égal au nombre de sites réactifs de (a) et (c), ou au nombre de sites réactifs de (a) et un produit de réaction,

(e) de (c) et (d), le produit de réaction (e) ayant au moins 2 sites capables de réagir avec les groupes éther glycidique.

6. Procédé selon la revendication 5, caractérisé en ce que le constituant (a) est une di(hydroxyalcoyl)amine.

7. Procédé selon l'une des revendications 5 et 6, caractérisé en ce que le constituant (c) a comme sites réactifs un ou plusieurs groupes amino primaire ou au moins 2 groupes amino secondaire par molécule.

8. Procédé selon la revendication 7, caractérisé en ce que le constituant (c) est un mélange de (1) une monoalcanolamine, (2) une amine disecondaire et (3) une monoamine primaire carboxylée ou sulfonylée.

9. Procédé selon la revendication 8, caractérisé en ce que le constituant (c) (3) est l'acide sulfanilique.

## Patentansprüche

1. Harzartige Bindemittel der Formel:

$$A-B-(C-B)_m-A$$

worin m 0 oder eine ganze Zahl von 1 bis 6, jedes A die gleiche oder eine unterschiedliche tert.-Aminogruppe, B eine — bzw. jedes B die gleiche oder eine unterschiedliche — Gruppe der Formel:

$$-CH_2-\underset{OH}{\underset{|}{CH}}-CH_2-[OR-O-CH_2-\overset{OH}{\overset{|}{CH}}-CH_2]_n-O-R-O-CH_2-\underset{OH}{\underset{|}{CH}}-CH_2-$$

ist, in welcher n 0 oder eine ganze Zahl von 1 bis 10 ist und R den Kohlenwasserstoffrest eines zweiwertigen Phenols bedeutet, und C eine — bzw. jedes C die gleiche oder eine unterschiedliche — Gruppe sein kann, die sich von einer Verbindung ableitet, welche zumindest 2 mit Glycidyläthergruppen reaktionsfähige Stellen enthält, dadurch gekennzeichnet, dass zumindest eine der Gruppen A, B oder C mit zumindest einer Gruppe $R_1$ der allgemeinen Formel

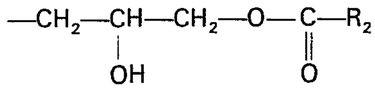

substituiert ist, worin $R_2$ eine $C_6$- bis $C_{20}$-Alkylgruppe ist.

2. Harzartiges Bindemittel nach Anspruch 1, dadurch gekennzeichnet, dass $R_2$ eine sekundäre oder tertiäre $C_8$- bis $C_{10}$-Alkylgruppe ist.

3. Verfahren zur Herstellung des harzartigen Bindemittels nach Anspruch 1 oder 2, dadurch gekennzeichnet, dass die Gruppe $R_1$ eingebracht wird durch Umsetzung von (a) zumindest einem Glycidylester einer aliphatischen Monocarbonsäure mit 7 bis 21 C-Atomen im Molekül und (b) einer primären oder sekundären Amino-, Hydroxyl- oder Säuregruppe einer Verbindung der Formel:

$$A_1-B_1-(C_1-B_1)_m-A_1$$

worin $A_1$, $B_1$, $C_1$ und m die gleiche Bedeutung wie A, B, C und m bzw. in Anspruch 1 haben — oder zumindest einer ihrer Komponenten.

4. Verfahren nach Anspruch 3, dadurch gekennzeichnet, dass die Verbindung der Formel:

$$A_1-B_1-(C_1-B_1)_m-A_1$$

mit dem Glycidylester und dem Anhydrid einer cyclischen Carbonsäure umgesetzt wird.

5. Verfahren nach Anspruch 3, dadurch gekennzeichnet, dass das harzartige Bindemittel in einer oder mehreren Verfahrensstufen hergestellt wird durch Umsetzung

(a) eines sekundären Monoamins,

(b) eines Glycidyläthers eines zweiwertigen Phenols, und

(c) einer Verbindung mit zumindest 2 Stellen, die mit den Glycidyläthergruppen zu reagieren vermögen, und

(d) zumindest der Glycidylester in solchen Mengen, dass die Anzahl der Epoxyäquivalente des Diglycidyläthers (b) im wesentlichen gleich ist der Anzahl der reaktiven Stellen von (a) und (c) oder der Anzahl der reaktiven Stellen von (a) und einem Reaktionsprodukt,

(e) von (c) und (d), welches Reaktionsprodukt (e) zumindest 2 Stellen besitzt, welche mit den Glycidyläthergruppen zu reagieren vermögen.

6. Verfahren nach Anspruch 5, dadurch gekennzeichnet, dass die Komponente (a) ein Di(hydroxyalkyl)-amin ist.

7. Verfahren nach Anspruch 5 oder 6, dadurch gekennzeichnet, dass die Komponente (c) als reaktive Stellen eine oder mehrere primäre oder zumindest 2 sekundäre Amingruppen je Molekül enthält.

8. Verfahren nach Anspruch 7, dadurch gekennzeichnet, dass die Komponente (c) ein Gemisch von 1. einem Monoalkanolamin, 2. einem di-sekundären Amin und 3. einem Carboxyl- oder Sulfonylsubstituierten primären Monoamin ist.

9. Verfahren nach Anspruch 8, dadurch gekennzeichnet, dass die Komponente (c) 3. Sulfanilsäure ist.